# EUROPEAN PATENT APPLICATION

(11) **EP 4 685 432 A1**
(43) Date of publication of application: **28.01.2026**
(21) Application number: 24190931.6
(22) Date of filing: 25.07.2024
(51) Int. Cl.: G01B 11/02, B23Q 17/24, G01B 11/04, G01B 11/24

(54) **METHOD AND USE OF NON-CONTACT TOOL MEASUREMENT**

(71) Applicant: Renishaw plc, Wotton-under-Edge, Gloucestershire GL12 8JR (GB)
(72) Inventor: MERRIFIELD, Benjamin Jason, Wotton-under-Edge, GL12 8JR (GB); CLUFF, Julian Alexander, Wotton-under-Edge, GL12 8JR (GB); SOMERVILLE, Leo Christopher, St. Charles (US)
(74) Representative: Dunn, Paul Edward

(57) **Abstract**

A method is described of using a non-contact tool setting apparatus mounted to a machine tool to measure an object, such as a cutting tool (20;120a-c). The non-contact or break-beam tool setting apparatus comprising a transmitter (52;80;90;100) configured to generate a light beam (54;82;96; 102) for detection by the receiver (58;84;94; 104). The light beam (54;82;96; 102) passes along a beam path (56;86;92; 106) into which the object (20; 120a-c) can be placed and has a cross-sectional area that varies along the beam path (56;86;92; 106) and/or an asymmetrical cross-section. The method comprises a step of taking a first measurement of the object (20; 120a-c) in which the object occludes the light beam (54;82;96; 102) at a first axial position (P1) along the beam path (56;86;92; 106) from a first radial direction perpendicular to the beam path (56;86;92; 106). A step is also performed of calculating the first axial position and/or the first radial direction using a previously determined variation in the cross-sectional area and/or asymmetry of the light beam (54;82;96; 102). The method may also include taking a second measurement of the object (20;120a-c) in which the object occludes the light beam (54;82;96;102) at a second axial position (P2, P3) along the beam path (56;86;92; 106) from a second radial direction perpendicular to the beam path (56;86;92; 106). In this manner, the effective beam width may be controlled. The measurements of the object may comprise scanning or trigger measurement.

## Description

The present invention relates to a method of using a non-contact tool setting apparatus mounted to a machine tool to measure an object, such as a cutting tool. In particular, the present invention relates to an improved method of performing non-contact tool measurements using different light beam dimensions.

Break-beam tool setting devices for use on machine tools are known, for example see EP1050368. Tool setting apparatus of this type includes a light source (transmitter) which generates a beam of light which is passed to a light detector (receiver). During a tool measurement process, the machine tool is operated to move a tool into and out of the light beam. Interruption of the light beam by the tool is detected by analysis of the light detector output signal and the apparatus generates a so-called "trigger signal" to indicate to the associated machine tool that the light beam has been broken. Typically, this trigger signal is issued when the light level reaches 50% of the "beam clear" state (i.e. when 50% of the optical beam is blocked from reaching the detector). The machine tool records the position of the tool relative to the tool setting device on receipt of the trigger signal thereby allowing a single position on the tool edge to be determined. This measurement move may be repeated multiple times to measure, one by one, multiple different positions on the tool edge. Such a trigger measurement allows tool size, such as the tool length and/or tool diameter, to be measured. The measurement of run-out (eccentricity) of rotating tools using such measurements is described in EP4042102.

EP1502699 describes how caps comprising holes of different dimensions may be used to define the diameter of the light beam that is used for tool measurements. This allows the apparatus to be more easily configured when using different separations between the transmitter and the receiver. The arrangement described in EP1502699 has also been implemented in the NC4 tool setting apparatus that is sold by Renishaw plc, New Mills, Wotton-Under-Edge, Gloucestershire, UK. The transmitter and receiver of such NC4 apparatus can be spaced apart by different amounts as required, with the appropriate cap providing the desired spot size of the collimated light beam. For example, a collimated light beam may be passed between a transmitter and receiver pair that are located on the opposite sides of a working volume of a machine tool. For a dual spindle machine tool, the different tools held by the different spindles may both be separately insertable into the light beam at different locations along the light beam, thereby allowing the separate measurement of the two different tools held by the two different spindles. EP3864368 describes the use of a short wavelength of light and hence a smaller diameter light beam to reduce the consumption of air when using a protective air flow to prevent the ingress of contaminants.

EP3679318 describes how tool profiles can also be measured using a non-contact tool setting apparatus by tracing a light beam around the periphery of a tool. This technique allows many more points around a tool periphery to be measured than the point-by-point measurement techniques described in EP1050368. EP3679335 describes how the beam diameter of such a tool setting apparatus may be measured "on-machine" and how such beam diameter information may be used for the tool profile measurements that are described in EP3679318.

EP4368334 describes a tool setting apparatus that uses a composite beam formed from a plurality of overlapping light beams that are directed along the same optical path. The composite beam includes multiple light beams that allow two measurements of a tool to be performed together. In one embodiment, adaptive optics are used to adjust the beam diameter in a time dependent sequence to allow the two measurements to be performed sequentially. Such an optical arrangement is, however, costly and complex to implement.

According to a first aspect of the present invention, there is provided a method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam having a cross-sectional area that varies along the beam path and/or an asymmetrical cross-section, the method comprising a step of taking a first measurement of the object in which the object occludes the light beam at a first axial position along the beam path from a first radial direction perpendicular to the beam path, characterised in that the method comprises a step of calculating the first axial position and/or the first radial direction using a previously determined variation in the cross-sectional area and/or asymmetry of the light beam.

The method of the present invention thus uses a non-contact tool setting apparatus, which may also be termed a break-beam tool setter or a non-contact tool measurement device, to measure an object. The non-contact tool setting apparatus comprises a transmitter and a receiver. The transmitter includes a light source, such as a laser. The transmitter is configured to emit a light beam that is received (i.e., detected) by the receiver. The light beam emitted by the transmitter is directed to the receiver along a beam path. The beam path between the transmitter and the receiver passes through a free-space region into which objects, such as cutting tools or the like, can be inserted under the positional control of the machine tool. As per the known apparatus described above, the insertion of such objects into the light beam occludes (blocks) the light beam thereby reducing the intensity of light reaching and being detected by the receiver. Appropriate analysis of the received light intensity in combination with the position and/or orientation of the object relative to the non-contact tool setting apparatus as measured by the machine tool allows various measurements of the object to be made.

The apparatus used in the method of the present invention is configured so that the light beam has a cross-sectional area that varies along the beam path and/or is configured so that the light beam has an asymmetrical cross-section. The cross-sectional area of the light beam may thus vary along the beam path. For example, the beam size (e.g., the beam width or beam diameter) may change (i.e., increase and/or decrease) with position along the beam path. The light beam may have an asymmetrical (non-circular) cross-section. The beam width may thus be different at different angles around the axis of the light beam. For example, the light beam may have an oval-shaped cross-section with minor and major axes of different lengths, or the light beam may have a line-shaped (e.g., pencil-like) profile. The light beam may have both an asymmetrical cross-section and a cross-sectional area that varies along the beam path. In such a case, the effective beam width will change with both axial position and radial direction. Providing such a configuration of non-contact tool setting apparatus means that the effective beam width will differ along the beam path and/or when the object occludes the light beam from different radial directions.

The present inventors have recognised that different measurements taken by non-contact tool setting apparatus ideally require light beams of different effective beam widths. For example, a measurement of tool length or diameter may involve a so-called trigger measurement in which the non-contact tool setting apparatus is configured to generate a trigger signal when the received light intensity crosses a certain threshold (e.g., 50%). In such a trigger measurement, using a smaller light beam (e.g., a light beam having a small beam width) increases the measurement resolution. In contrast, scanning a laser beam along the edge of a tool to measure a tool profile (e.g., performing a scanning measurement of the type described in EP3679318) typically requires a larger light beam to ensure the tool edge remains in the light beam whilst a tool inspection path is traversed. To date, it has either been necessary to find an intermediate width of light beam that can be used for both types of measurements, or to sacrifice the accuracy of the length/diameter measurements to allow the tool profile to be scanned.

As outlined above, the method of the present invention uses a non-contact tool setting apparatus in which the light beam has a cross-sectional area that varies along the beam path and/or has an asymmetrical cross-section. A calculation is performed using a previously determined (e.g., pre-measured) variation in the cross-sectional area and/or asymmetry of the light beam to determine a first axial position and/or a first radial direction. In particular, the calculation may use a previously determined variation in cross-sectional area to determine a first axial position and/or the calculation may use a predetermined variation in the asymmetry of the cross-section to determine a first radial direction. For example, such a calculation may use previously collected information describing the cross-sectional area of the light beam along the beam path and/or the effective width of the light beam as a function of radial direction. Such information may be stored as a mathematical (e.g., polynomial) function or in a look-up table. Such a calculation may be used to determine a first axial position and/or a first radial direction that gives a first effective beam width suitable for the first measurement. It should be noted that only one of the first axial position and/or the first radial direction may need to be calculated. For example, for a symmetrical beam there would be no need to calculate a first radial direction (i.e., because all radial directions at the first axial position would provide the same effective beam radius). Similarly, for an asymmetrical but collimated light beam (e.g., an oval shaped beam) there would be the same effective beam radius along the beam path for a given radial direction so there is no need to calculate an axial position. A first measurement of the object, which may include a trigger measurement and/or a scanning measurement, is then taken using the first axial position and/or the first radial direction. In this manner, a first measurement can be taken with an axial position and/or a radial direction that provide an effective beam width optimised or tailored to the specific measurement being performed.

In the prior art methods described in the introduction above, measurements are taken at a certain, predefined position along the beam path (e.g., at a mid-point between the transmitter/receiver) with the object inserted into the light beam along a certain predefined radial direction (e.g., from a vertical or horizontal direction). If any changes to the beam size are required, these are made by altering the optical system that generates and detects the light beam. For example, by changing a cap as per EP 1502699 or by forming a composite beam as per EP4368334. In contrast, the method of the present invention makes use of the variation in effective beam diameter that occurs for light beams that vary in size and/or are asymmetrical by taking object measurements at different positions along the beam path or by using different radial directions around the beam path. In particular, a known variation in the size or shape of the light beam can be used to allow a first axial position and/or a first radial direction to be calculated that provides a first effective beam width that is optimised for the measurement being performed. For example, a small effective beam width may be provided for trigger measurements, or a larger effective beam width may be provided for scanning measurements. Importantly, such an adjustment of the effective beam width can be done without having to adjust any of the optical components that generate and detect the light beam, thereby providing a lower cost but highly effective method of optimising measurement performance.

It should be noted that the term "axial" as used herein refers to the direction along the axis of the light beam that passes along the beam path from the transmitter to the receiver. An axial position is thus a point along the beam path. The radial direction is a direction perpendicular to the (light beam) axis. In other words, the radial direction is a direction (e.g., between 0° and 360°) in a cross-sectional plane perpendicular to the axis of the light beam.

The method may be used to take one or more trigger measurements of the object. The first measurement may comprise a trigger measurement. For example, the first measurement may comprise measuring at least one dimension of the object by moving the object into, or out of, the light beam (i.e., at the first axial position along the first radial direction). The method may also include a step of issuing a trigger signal to a controller of the machine tool when the intensity of light received by the receiver crosses a threshold. For example, the non-contact tool setting apparatus may be configured to issue a trigger signal to a controller of the machine tool when the intensity of light received by the receiver crosses a threshold. The first axial position and/or the first radial direction may thus be selected to provide a first effective beam width that is suitable for such trigger measurements.

The method may be used to take one or more scanning measurements of the object. The first measurement may comprise a scanning measurement. In particular, the first measurement may advantageously comprise measuring a profile of the object by moving the object relative to the light beam along an inspection path that traces the light beam along a periphery of the object. As mentioned above, the object will occlude the light beam at the first axial position along the first radial direction for the first measurement. The intensity of light received by the receiver may be recorded whilst the inspection path is traversed. Analysing the intensity of light received by the receiver whilst the inspection path is traversed may be used to determine a profile of the object. The analysis may determine the profile of the object at the same time as, or after, the received light intensity values are collected. The object may be rotated about its longitudinal axis by the machine tool (e.g., by a spindle of the machine tool that holds the object) during such a scanning measurement. Alternatively, the object may not be rotated during the measurement. The first axial position and/or the first radial direction may thus be selected to provide a first effective beam width that is suitable for scanning measurements. The first measurement may comprise taking both trigger measurements and scanning measurements, in any order.

The method conveniently comprises a step of taking a second measurement of the object. The object occludes the light beam at a second axial position along the beam path from a second radial direction perpendicular to the beam path during such a second measurement. The first axial position and the first radial direction may provide a first effective beam width for the first measurement. The second axial position and the second radial direction may provide a second effective beam width for the second measurement. The second effective beam width may be different than the first effective beam width. In other words, a second measurement of the object may be taken with a different effective beam width than the first measurement by altering the radial and/or axial position of the object in the light beam.

The second measurement may include a step of using a previously determined variation in the cross-sectional area and/or asymmetry of the light beam to calculate a second axial position and/or a second radial direction having a second effective beam width suitable for the second measurement of the object. Alternatively, the second measurement may be performed using a preset axial position and radial direction (e.g., it may comprise a measurement of the type described in the prior art that is performed at the mid-point between the transmitter and receiver along a defined radial direction).

As explained above, the first measurement may comprise a trigger measurement and/or a scanning measurement. The second measurement may similarly comprise a trigger measurement and/or a scanning measurement. For example, the second measurement may comprise measuring a profile of the object by moving the object relative to the light beam along an inspection path that traces the light beam along a periphery of the object. Analysing the intensity of light received by the receiver whilst the inspection path is traversed may be used to determine a profile of the object. As explained in more detail in EP3679318, the collected light intensity data is typically combined with machine tool position information to provide such a profile measurement. It should be noted that a different inspection path may be used for the first and second measurements. The object may be rotated about its longitudinal axis by the spindle of the machine tool during such a scanning measurement. Alternatively, the object may not be rotated during the measurement. In this manner, a profile of the object may be established or recorded. The second measurement may be performed after the first measurement. The second measurement may be performed before the first measurement.

The present invention thus provides a method that enables the non-contact measurement of an object to be performed using light beams of different effective beam widths. Importantly, the tool setting apparatus itself does not need to be adjusted to enable measurements using such different effective beam widths to be taken. Instead, the axial position and/or radial orientation of the object relative to the apparatus can be adjusted as required by the machine tool. This removes the need to use a composite beam or active optical elements as described in EP4368334 to alter the effective beam width used for measurements, thereby reducing complexity and cost.

As explained above, a change in the effective beam width may be implemented by using a light beam having a size that varies along the beam path. In a preferred embodiment, the light beam has a cross-sectional area (size) that varies along the beam path. The first axial position may then be conveniently spaced apart from the second axial position along the beam path. In other words, the first and second measurements may be taken at first and second axial positions along the beam path. In this manner, the size (i.e., cross-sectional area) of the light beam at the first axial position will be different to the size of the light beam at the second axial position. The lateral spacing apart of the first and second axial positions along the beam path thus enables the second measurement of the object to be performed using a light beam having a different size to that used for the first measurement. In such an embodiment, the light beam may be symmetrical. For example, the light beam may have a circular cross-section, and the beam diameters at the first and second axial positions may thus be different.

As explained above, a change in the effective beam width may also be implemented by using a light beam having an asymmetrical cross-section. For example, the light beam may have an oval cross-section. The oval-shaped cross-section may have a minor axis and a major axis that are of different lengths. In this manner, altering the radial direction along which the object occludes the light beam can be used to change the effective beam width of a measurement. For example, a radial direction that coincides with the minor axis of an oval-shaped beam will provide a smaller effective beam width than a radial direction that coincides with the major axis of such an oval-shaped light beam. Selecting a radial direction between the major and minor axes allows an effective beam width between the major and minor values to be selected. It should be noted that other asymmetrical cross-sectional shapes would also be possible. For example, a pencil-shaped or rectangular beam cross-section could be used. The shape of the light beam cross-section may be invariant along the beam path. Alternatively, the shape of the light beam cross-section may vary along the beam path. For example, the minor and major axes of an oval-shaped light beam may vary in length or rotate relative to the object with axial position along the beam path.

It would also be possible for there to be both variation in the cross-sectional area of the light beam along the beam path combined with the light beam having an asymmetrical cross-section. For example, an oval-shaped or pencil-shaped light beam that increased or decreased in cross-sectional area along the beam path could be provided. In such an example, both the axial position and the radial direction would define the effective beam width. The use of an asymmetrical light beam and/or a light beam that changes in size (cross-sectional area) along the beam path thus allows the effective beam width used for measurement to be controlled. There may, of course, be some restrictions on where the machine tool could place the object or the orientations of the object that would be possible. For example, it may be difficult to place large objects away from the mid-point of the tool setting apparatus or the machine tool may only have a limited number of rotational axes that prevents measurement using certain radial directions. The ability to adjust the effective beam size by altering both of the radial direction and the axial position of the object may thus provide added flexibility that allows the method to be implemented on a wider range of machine tools.

It should be noted that the method could be used on a variety of machine tools that impart different types of relative motions between the object (e.g., the tool to be measured) and the part of the machine to which the non-contact tool setting apparatus is mounted. For example, a machine tool may be provided in which a spindle holding the tool is moved along three linear axes relative to a stationary table on which the non-contact tool setting apparatus is mounted. In such an example, a light beam that changes in size (cross-sectional area) along the beam path could be used to provide different beam widths at different points along the beam path. The machine tool may also include a spindle head that can be rotated (e.g. tilted) about one or two axes relative to the table on which the non-contact tool setting apparatus is mounted. For such a machine tool, adjusting the angle of the spindle (and hence the tool) relative to a light beam having an asymmetrical cross-section would allow different effective beam widths to be used. It would also be possible to mount the non-contact tool setting apparatus on a tiltable and/or rotatable table to provide relative rotational motion between the object and the non-contact tool setting apparatus. The skilled person would appreciate the many different types of machine tool that are available, and how the method of the present invention could be optimised for such machine tools accordingly.

Advantageously, the first effective beam width differs from the second effective beam width by at least 10%. More preferably, the first effective beam width differs from the second effective beam width by at least 25%. More preferably, the first effective beam width differs from the second effective beam width by at least 50%. More preferably, the first effective beam width differs from the second effective beam width by at least a factor of two. More preferably, the first effective beam width differs from the second effective beam width by at least a factor of three. More preferably, the first effective beam width differs from the second effective beam width by at least a factor of four. For example, the first effective beam width may be 0.025mm and the second effective beam width may be 0.1mm.

If the light beam has a cross-sectional area that varies along the beam path, the cross-section area of the light beam may be different at the first and second axial positions along the beam path. Advantageously, the cross-sectional area of the light beam at the first position differs from the cross-sectional area at the second position by at least 10%. Advantageously, the cross-sectional area of the light beam at the first position differs from the cross-sectional area at the second position by at least 25%. Advantageously, the cross-sectional area of the light beam at the first position differs from the cross-sectional area at the second position by at least 50%. Advantageously, the cross-sectional area of the light beam at the first position differs from the cross-sectional area at the second position by at least a factor of two. Advantageously, the cross-sectional area of the light beam at the first position differs from the cross-sectional area at the second position by at least a factor of three. Preferably, the cross-sectional area of the light beam at the first position differs from the cross-sectional area at the second position by at least a factor of four.

If the light beam is asymmetrical, the cross-section of the light beam may have a maximum beam radius in one radial direction and a minimum beam radius in another radial direction. Advantageously, the minimum and maximum beam radii may vary by at least 10%. Advantageously, the minimum and maximum beam radii may vary by at least 25%. Advantageously, the minimum and maximum beam radii may vary by at least 50%. Advantageously, the minimum and maximum beam radii may vary by at least a factor of two. Advantageously, the minimum and maximum beam radii may vary by at least a factor of three. Advantageously, the minimum and maximum beam radii may vary by at least a factor of four.

The second effective beam width may be larger than the first effective beam width. Advantageously, the first effective beam width at the first position is larger than the second effective beam width at the second position. For example, the cross-sectional area of the light beam at the first position may be larger than the cross-sectional area of the light beam at the second position. The second measurement may thereby have a finer resolution than the first measurement.

In one embodiment, the first measurement may comprise a coarse scanning measurement of the object. Such a coarse scanning measurement may, for example, be performed at a first position along the beam path where there is a relatively large beam. The coarse scanning measurement may be used to measure macro properties of the object, such as the eccentricity (run-out) of a rotating object or the general shape of the object. The second measurement may then comprise a finer resolution scanning measurement. Such a finer resolution scanning measurement may use a second position along the beam path where the cross-sectional area of the light beam is smaller than at the first position. This finer scanning measurement may provide further detail about the object profile. In the case of the object being a tool, the coarse scan may establish the general tool profile and eccentricity whilst the finer scan may be used to detect any damage (chips etc) to the cutting edges of the tool.

In another embodiment, the first axial position and the first radial direction may be selected to provide a light beam that is suitable for acquiring trigger measurements. The second axial position and the second radial direction may be selected to provide a light beam that is suitable for acquiring scanning measurements. In other words, the first and second measurements may comprise different types of measurement with the first and second effective beam diameters selected as appropriate.

It is usual to calibrate a non-contact tool setting apparatus prior to use and such apparatus is typically sold with control (macro) software that enables such a calibration process to be performed. The calibration process typically involves loading a calibrated tool or rod of known length and/or radius into the machine tool spindle and moving the calibrated tool or rod into the light beam at or near the mid-point between the transmitter and receiver where the object measurements are traditionally collected. A trigger measurement that is performed using such a calibrated tool or rod allows subsequently measured tool positions to be tied to the machine coordinate system.

In a preferred embodiment, the first axial position and the first radial direction are predefined. For example, the first axial position and the first radial direction may be factory configured. The first measurement may then use calibration data that was previously collected at the first axial position using the first radial direction. In other words, if a first axial position and the first radial direction are set prior to measurement it is possible to calibrate the apparatus for such an axial position and radial direction. For example, a known calibration process could be performed using the first axial position and the first radial direction. A first set of calibration data may thus be collected that relates to the first axial position and/or the first radial direction. The second axial position and the second radial direction (i.e., of the optional second measurement) may also be predefined. The second measurement may then use calibration data that was previously collected at the second axial position using the second radial direction. For example, a known calibration process could be performed using the second axial position and the second radial direction. A second set of calibration data may thus be collected that relates to the second axial position and/or the second radial direction. These sets of calibration data may be collected before, or after, the first and second measurements are performed. The non-contact tool setting apparatus, or the machine tool to which it is mounted, may store such calibration data (i.e., for use when performing first and/or second measurements). If the first and/or second axial position are predefined, the apparatus may include a base that has visual markings indicating the location of such positions along the beam path.

It should be noted that it is not essential to define axial positions or radial directions prior to measurement. Although that allows the collection of suitable calibration data, it would also be possible to calculate a bespoke axial position or radial direction for the different measurements that are performed using the apparatus. For example, the method may comprise a step of using the first measurement to set the second axial position and/or the second radial direction of the second measurement. For example, if the first measurement includes a coarse scanning measurement, the output of that scan (e.g., a dimension of the object and/or an eccentricity of the object) may be used to set the second axial position and/or the second radial direction that is used for the second measurement. For example, a second axial position and/or second radial direction may be calculated that provides a second effective beam width that ensures the edge of the object remains in the light whilst a tool inspection path is traversed during a second (scanning) measurement. If necessary, a step of calibrating the apparatus may be performed at the second axial position using the second radial direction prior to the second measurement. It would also be possible to collect such calibration data after the second measurement. Alternatively, suitable calibration data may be derived from previous calibration measurements (e.g., from a series of calibration measurement along and/or around the beam path).

As mentioned above, the light beam has a cross-sectional area that varies along the beam path and/or an asymmetrical cross-section. The light beam may have any suitable variation in cross-sectional area along the beam path. In other words, the size and/or shape of the cross-section of the light beam may vary along the beam path. The light beam is thus preferably non-collimated. Advantageously, the light beam is a convergent light beam having a cross-sectional area that reduces along the beam path from the transmitter to the receiver. In such an example, a relatively small spot of light may be detected at the receiver whilst a relatively large, converging light beam may be output from the transmitter. Alternatively, the light beam is a divergent light beam having a cross-sectional area that increases along the beam path from the transmitter to the receiver. In such an example, the light beam may form a small spot adjacent the transmitter and diverge to a larger spot that falls on the detector.

In an alternative embodiment, the light beam is a focussed light beam that is focussed to a focal point on the beam path. In other words, the light beam converges to a focal plane or focus along the beam path, before diverging towards the receiver. The focal point may be located at approximately the mid-point between the transmitter and the receiver. The non-contact tool setting apparatus may thus be configured as per prior art devices, but with at least one of the first and second measurement taken at a point along the beam path that is spaced apart from the focal point. In a preferred embodiment, the focal point is closer to one of the receiver or the transmitter than the other of the receiver or the transmitter. In other words, the focal point may be closer to the transmitter than the receiver, or vice versa. This allows there to be a larger variation in cross-sectional dimension between the focal point and another point along the beam path for a given spacing between the transmitter and the receiver.

The magnitude of the variation in the cross-sectional area of the light beam along the beam path may be configured to provide a required difference in beam size between the first and second axial positions. In turn, the required difference in beam size may be calculated based on the types of measurements that are to be performed using the apparatus. For example, a maximum beam size (e.g., a maximum beam diameter) may be calculated to enable a coarse scanning measurement of an object (e.g., a tool having certain dimensional tolerances) to be performed, and to allow for a certain amount of eccentricity when the object is rotated by the machine tool. The minimum beam size may be set to provide the finest resolution of measurement required from the apparatus.

The light beam may have any suitable shape. The transmitter and receiver may be configured to provide a light beam of any suitable shape. The light beam may have a symmetrical cross-section. For example, the light beam may have a substantially circular cross-section along the beam path. The light beam may have a Gaussian profile. The light beam may have an asymmetrical cross-section. For example, the light beam may have a square or a rectangular (e.g., pencil-like) cross-section. The light beam may have an oval cross-section.

It should be noted that the person skilled in the art would appreciate the various optical components (lenses, apertures, diffractive optical elements etc) of the transmitter and/or receiver that could be used to provide the required light beam (e.g., to provide a convergent, divergent or focussed light beam that is symmetrical or asymmetrical). As explained above, such optical components are preferably fixed (e.g., during manufacture or pre-installation configuration) to provide the required light beam without needing to be adjusted when the apparatus is in use. In other words, the apparatus preferably does not allow the light beam size and shape to be adjusted when in use.

For completeness, it should also be noted that the light beam comprises the rays of light that are emitted by the transmitter and are also detected by the receiver. In other words, the light beam is the detected light beam, which may also be termed a probe beam. Other light may thus be emitted by the transmitter that does not form part of the light beam. The shape of the light beam may thus be defined by the transmitter, the receiver or by both the transmitter and the receiver. For example, an aperture provided at the receiver may prevent some of the light emitted by the transmitter from being detected. In such an example, the light beam comprises the light detected by the receiver and not any surrounding light that is blocked by the receiver's aperture. In other words, any non-detected light rays (in the beam-clear condition where no object to be measured is obscuring the light beam) do not form part of the light beam. The light beam may comprise any wavelength or wavelengths of light, from the ultraviolet to the far infra-red. For example, the light beam may comprise visible light. The light beam may comprise light that is not visible to a human (e.g., ultraviolet light). The light beam may be monochromatic. The light beam may be a laser beam (i.e., the transmitter may include a laser for generating the light beam).

In addition to taking a first measurement and an optional second measurement as described above, the method may also comprise taking further measurements of the object. For example, such measurement could be taken at further (e.g., third, fourth, fifth etc) axial positions along the beam path and/or using further (e.g., third, fourth, fifth etc) axial directions. The further measurement(s) of the object may comprise trigger and/or scanning measurements. In a preferred embodiment, first, second and third scanning measurement may be taken using a progressively smaller light beam. This may allow a coarse scan to be taken as the first measurement that allows tool dimensions and eccentricity to be measured, a fine resolution scan to be taken as a second measurement to measure tool profile and a higher resolution scan to be performed as a third measurement for any areas of interest (e.g., chips or defects) that are identified from the second measurement. Importantly, this can all be done by altering the position along or around the light beam where the measurements are taken (i.e., without having to reconfigure the tool setting apparatus).

The present method uses a previously determined variation in the cross-sectional area and/or asymmetry of the light beam to calculate the first axial position and/or the first radial direction. The method may thus include an initial step of determining such a variation in the cross-sectional area and/or asymmetry of the light beam. This may be done by measuring the cross-sectional width of the light beam at a plurality of positions along the beam path and/or in a plurality of radial directions. For example, beam width measurements may be taken at various axial positions along the beam path. Any suitable technique or apparatus may be used to measure the cross-sectional area and/or asymmetry of the light beam. Advantageous, such measurements are made using the "on-machine" method described in EP3679335.

The measured cross-sectional area and/or asymmetry of the light beam may be stored in a memory (e.g., in a memory of the non-contact tool setting apparatus or machine tool). The cross-sectional area and/or asymmetry of the light beam may be stored in the form of a look-up table. The cross-sectional area and/or asymmetry of the light beam may be stored in the form of a mathematical function (e.g., a polynomial function). The variation in the cross-sectional area and/or asymmetry of the light beam may be measured during a calibration process that is performed during manufacture or installation of the apparatus and stored for future use. Alternatively, the variations in the cross-sectional area and/or asymmetry of the light beam may be measured periodically or prior to taking a measurement.

The method may be used to measure any object. The object may be a part of another measurement device. For example, the object may comprise the stylus (e.g., the stylus ball) of a spindle-mounted measurement probe or the object may comprise a calibration arbour (calibration pin). The method may then be used to measure the cleanliness of the object (e.g., to check if debris is attached to the stylus or calibration pin).

Advantageously, the object comprises a cutting tool. The object may comprise a form tool. The object may comprise a milling tool. The object may comprise a toothed cutting tool having one or more cutting teeth. The object may comprise a (toothed) helical cutting tool. The measurements of the present method may be used to measure the profile of the cutting edges of such a toothed cutting tool. Alternatively, the object may comprise a turning tool. The object may comprise a cutting insert. The object may comprise a grinding tool or burr tool. In such an example, a first scanning or trigger measurement may be used to measure tool eccentricity that allows a second scanning measurement to be performed to provide a finer resolution scan of the particles (grits) of the grinding (burr) tool. The finer resolution scan may use a beam size appropriate for the size of the particles (grits) of the grinding (burr) tool. The object may also comprise a tap, reamer etc.

According to a second aspect of the present invention, there is provided a method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam having a cross-sectional area that varies along the beam path, wherein the method comprises the steps of; (i) taking a first measurement of the object with the object located in the light beam at a first position along the beam path, and (ii) taking a second measurement of the object with the object located in the light beam at a second position along the beam path, the first position being spaced apart from the second position.

Instead of always inserting the object being measured into the light beam at a position near the mid-point between the transmitter and receiver, a method is provided in which the object is inserted into the light beam at two different, spaced-apart positions along the beam path so that differently sized light beams impinge on the object during measurement. This allows the effective beam size used for measurements to be optimised for the type of first and second measurements that are to be performed. For example, a first beam size may be used for trigger measurements and a second, larger beam size may be used for scanning measurements. Alternatively, a first beam size be used for coarse scan measurements and a second, smaller beam size may be used for fine scanning measurements. The first position may be the mid-point between the transmitter and receiver, or it may be offset from the mid-point. The first position may be selected so that the light beam has a cross-sectional dimension that is appropriate for the measurement being taken. The first measurement may comprise a trigger measurement and/or a scanning measurement. The second measurement may comprise a trigger measurement and/or a scanning measurement.

According to a third aspect of the present invention, there is provided a method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam being asymmetrical, wherein the method comprises the steps of; (i) taking a first measurement of the object from a first radial direction perpendicular to the beam path, and (ii) taking a second measurement of the object from a second radial direction perpendicular to the beam path, the first radial direction being different than the second radial direction.

The use of an asymmetrical light beam allows the effective beam width of a measurement to be altered by varying the radial direction along which the object is located in the light beam. In particular, the first and second radial directions allow the first and second measurements to be performed using light beams of different effective beam widths. The first measurement may comprise a trigger measurement or a scanning measurement. The second measurement may comprise a trigger measurement or a scanning measurement.

Also described herein is a method of using a non-contact tool setting apparatus mounted to a machine tool to measure an object, the non-contact tool setting apparatus comprising a transmitter configured to pass a light beam to a receiver along a beam path into which the object can be placed, the light beam having a cross-sectional dimension that varies along the beam path, wherein the method comprises the steps of; (i) taking a first measurement of the object with the object located in the light beam at a first position along the beam path, and (ii) taking a second measurement of the object with the object located in the light beam at a second position along the beam path, the first position being spaced apart from the second position.

Also described herein is a method of using a non-contact tool setting apparatus mounted to a machine tool to measure an object, the non-contact tool setting apparatus comprising a transmitter configured to pass a light beam to a receiver along a beam path into which the object can be placed, the light beam having a cross-sectional dimension that varies along the beam path, wherein the method comprises the steps of; (a) selecting a measurement position along the beam path based on a required cross-sectional dimension of the light beam, and (b) taking a measurement of the object with the object located in the light beam at the measurement position. The method may be performed using any of the steps or apparatus described above.

The present invention will now be described, by way of example only, with reference to the accompanying drawings in which;
Figure 1 illustrates a known use of a tool setting apparatus to measure a tool,
Figure 2 illustrates use of a tool setting apparatus generating a focussed light beam to measure a tool at two positions along the beam path,
Figure 3 illustrates use of a tool setting apparatus generating a divergent light beam to measure a tool at two positions along the beam path,
Figure 4 illustrates use of a tool setting apparatus generating an asymmetrical focussed light beam to measure a tool at two positions along the beam path,
Figure 5 illustrates use of a tool setting apparatus generating an asymmetrical focussed light beam in which a second position is selected based on a measurement of the tool at the first position,
Figure 6 shows coarse, fine and finer scanning measurements performed on cutting tool,
Figure 7 illustrates an alternative embodiment of the invention in which the tool setting apparatus generating an asymmetrical light beam, and
Figures 8a and 8b illustrate how the effective beam width can be adjusted in the apparatus of figure 7 by altering the angle of the tool relative to the light beam.

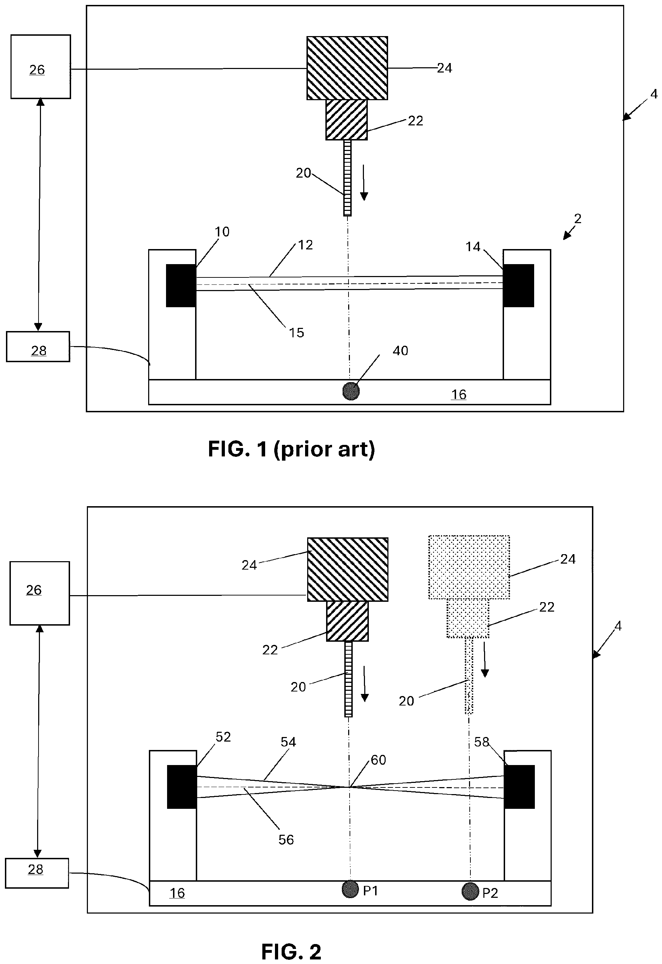

Referring to figure 1, a non-contact tool setting apparatus 2 is shown mounted inside the enclosure of a machine tool 4. The machine tool 4 includes a head 24 that can be translated in three orthogonal directions (x,y,z) and which carries a rotatable spindle 22 holding a cutting tool 20. The spindle 22 allows the tool 20 to be rotated about its longitudinal axis at high speed for cutting operations.

The tool setting apparatus 2 comprises a transmitter 10 having a laser diode and suitable optics (not shown) for generating a collimated beam of light 12. A receiver 14 comprising a photodiode (not shown) receives the beam of light 12. The beam of light 12 passes between the transmitter 10 and receiver 14 along a beam path 15. The transmitter 10 and receiver 14 are both affixed to a common base 16 and thus maintain a fixed spacing and orientation relative to one another. The base 16 is affixed to the bed of the machine tool, although it could be mounted in any appropriate location within the machine tool enclosure. It should also be noted that various alternative structures for mounting the transmitter and receiver could be used. For example, a common housing for the transmitter and receiver could be provided or discrete transmitter and receiver units could be separately mounted to the machine tool. It should also be remembered that the drawings are not to scale and the tool setting apparatus 2 would typically take up only a small part of the machine tool enclosure.

A tool setting interface 28 is connected to the transmitter 10 and receiver 14. Although illustrated as a single item, the interface 28 could alternatively be provided as a plurality of inter-connected sub-units or boxes. The interface 28 provides electrical power to the transmitter 10 and receiver 14 and receives a beam intensity signal from the photodiode detector of the receiver 14. The interface 28 comprises an analogue to digital convertor (ADC) that samples the analogue beam intensity signal generated by the receiver 14 and generates a stream of digital beam intensity values. This stream of digital beam intensity values, also termed the beam intensity data, can also be analysed by a digital signal processor (DSP, not shown) within the interface 28. Alternatively, such analysis of the beam intensity data could be performed by the controller 26 or by an external computer (not shown). The interface 28 is also connected to the numerical controller 26 of the machine tool. The numerical controller 26 control the motion of the translational axes of the machine tool (i.e., so the spindle 22 and tool 20 etc can be moved around in x, y, and z) and the rotational angle of the spindle 22 (i.e. so the tool 20 can be rotated about its longitudinal axis). Other machine tool configurations would, of course, be possible. For example, the table could be moved to provide some or all of the relative motion between the tool 20 and the light beam 12.

As explained in detail in EP3679318 it is known to use tool setting apparatus of the type shown in figure 1 to measure the dimensions (e.g., the length, diameter etc) of a tool and to scan the periphery (e.g., edge) of a cutting tool. A typical tool dimension measurement comprises moving the tool into, or out of, the light beam 12 whilst monitoring the beam intensity signal generated by the receiver 14. Figure 1 illustrate how the length of the tool 20 can be measured by moving the tool vertically downwards into the light beam 12. A trigger signal is issued by the interface 28 to the controller 26 when a 50% light level threshold is crossed. The position of the tool within the machine tool is captured on receipt of the trigger signal and further motion of the tool is halted. This allows the tool dimension (e.g., tool length) to be determined. The peripheral edge of a tool (which may be rotating at a high speed) can also be scanned. This is done by placing the tool edge in the light beam 12 and then moving the tool relative to the light beam along a tool inspection path which traces the beam along the tool periphery. The interface 28 collects beam intensity data as the tool inspection path is traversed, and this can be used in combination with machine tool position data to extract information on the tool profile (e.g., to identify and chips or damage to the cutting edge of the tool).

Previously, measurements such as those described in EP3679318 were typically performed at a mid-point between the transmitter and receiver, as shown in figure 1. Calibration of the non-contact tool setting apparatus (e.g., using a known length bar or pin) was thus also performed at the mid-point. In known apparatus, a marking (e.g., a line or cross) is often included (e.g., etched, printed etc) on the base 16 to indicate an approximate position of the mid-point between the transmitter and receiver. For example, a marking may be provided on the base 16 at the location 40 illustrated in figure 1.

The measurement of tool dimensions (e.g., length, diameter) are often performed in combination with the tool edge scanning techniques of EP3679318. However, the present inventors have found that this makes the optimisation of the light beam 12 problematic. For a dimensional tool measurement (e.g., of tool length), it is preferred to use as small a beam diameter as possible to obtain as precise a positional measurement as possible. However, a larger beam diameter can be advantageous when scanning the light beam around the edge of the tool because measurements of the tool edge can only be collected when it is partially obscuring the light beam. The use of a small diameter beam thus risks the tool moving completely out of the light beam or fully blocking the light beam if there are deviations in the tool profile or tool location (e.g., due to eccentricity) that are larger than can be predicted when calculating the tool inspection path. Increasing the beam diameter reduces this possibility, but it also reduces the resolution of the measurement.

The use of a composite light beam formed from a plurality of light beams has recently been proposed in EP4368334. In one example, optical elements are used to dynamically adjust the beam diameter so that a composite beam is produced with a repeating temporal sequence of narrow and wide beams. However, producing two overlapping or temporally changing beams increases complexity and cost of the apparatus compared to apparatus with fixed optical systems.

Referring to figures 2 to 6, it will now be described how in one embodiment the present invention allows tool measurements to be collected using a light beam that varies in size along the beam path between the transmitter and receiver.

As shown in figure 2, a transmitter 52 of a non-contact tool setting apparatus is configured to generate a light beam 54 that is directed along a beam path 56 to a receiver 58. The light beam 54 is focussed to a point 60 that coincides with the mid-point between the transmitter 52 and the receiver 58. It should be noted that the use of such a focussed light beam has been used previously to collect measurement of tools that are inserted into the light beam. The method comprises taking two measurements of the same tool 20 at different positions along the beam path 56.

A first measurement of the tool 20 is taken at a first position along the beam path where the light beam has a first (small) diameter D1 and hence a first cross-sectional area. This first position may be located approximately above a marking P1 provided on the base of the apparatus. In other words, the first measurement may be taken at or near the focal point of the light beam which in this example is located approximately at the mid-point between the transmitter 54 and receiver 58. The first measurement may comprise, for example, a measurement of the length or diameter of tool (e.g. using a trigger signal issued when the received light intensity crosses a threshold). It would be possible to take multiple different measurements at the first position. For example, tool length and diameter may be measured by bringing the tool into the light beam from different directions. The small beam diameter D1 allows any such point measurements to be optimised for accuracy.

A second measurement of the tool 20 is taken at a second position where the light beam has a second (larger) diameter D2 and hence a second (larger) cross-section area. This is shown in dashed outlined in figure 2. To help tool positioning, a marking P2 may be provided on the base of the apparatus to identify such a second position. The second measurement is thus taken at a position away from the focal point of the light beam at a second position along the beam path 56 where the light beam 54 has diverged from the focal point. The second measurement comprises moving the edge of the tool 20 along a tool inspection path so that the light beam is traced along the periphery of the tool whilst collecting beam intensity data during the scan. The tool edge may thus be scanned, and the tool profile established from the collected beam intensity data. It should be noted that the tool location along the beam path is maintained at approximately the same axial position along the beam path during the second measurement. The diameter D2 of the light beam around marking P2 may be selected to optimise a scanning measurement. For example, the diameter D2 may be selected to ensure the tool edge remains in the light beam as the tool inspection path is traversed (taking into account eccentricity and other positioning errors).

The above-described method thus allows the measurement of a tool using a light beam of different diameter (and hence different cross-sectional area), but without requiring any changes to the optical configuration of the tool setting apparatus between such measurements. Configuring the apparatus to generate a beam with a dimension (e.g., an effective beam width or diameter) that varies along the beam path allows measurements to be taken by inserting the tool in the light beam at different points along the beam path (i.e., where dimensions of the light beam are different).

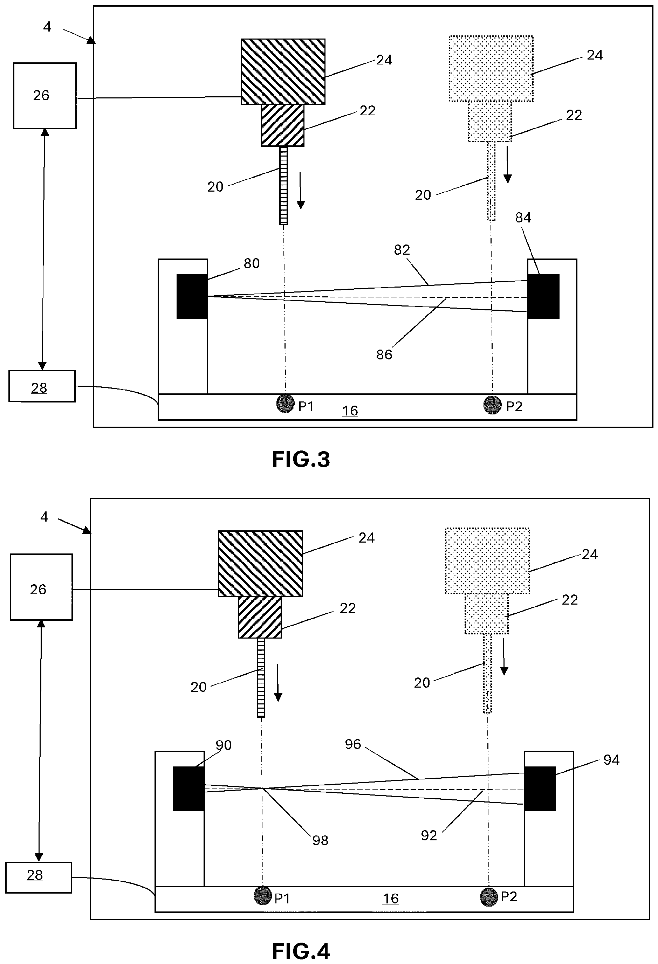

Referring to figure 3, an alternative configuration of a tool setting apparatus is shown. In particular, the apparatus includes a transmitter 80 that generates a diverging beam of light 82 that is directed to a receiver 84 along a beam path 86. A first measurement may be taken above the position P1 marked on the base 16, and a second measurement above the position marked P2. In this example, there is no focal point along the beam path 86, but a gradually increasing beam diameter from the transmitter 80 to the receiver 84. It would also be possible to provide a convergent arrangement, in which the light beam converges from the transmitter to the receiver, that has a similar effect.

Figure 4 shows a further variant of the tool setting apparatus in which a transmitter 90 passes a light beam 96 along a beam path 92 to a receiver 94. The transmitter 90 focusses the light beam 96 at a focal point 98 that is closer to the transmitter than the receiver (i.e., the focal point is located away from the midpoint). This allows a tightly focussed (small diameter) light spot to be provided at a first axial position along the beam path 92 that lies above the position P1. Such a tightly focussed light spot is typically preferred for touch trigger measurement. A less tightly focussed (larger diameter) beam spot is provided at a second axial position along the beam path 92 that lies above the point P2 shown in the drawings.

In the above examples, the tool setting apparatus may be pre-calibrated for measurement at the two axial positions P1 and P2. In other words, a standard calibration process may be performed (e.g., using a known length rod or reference tool) to relate an axial position in which the beam is obscured by a certain amount (e.g., 50%) to the coordinate system of the machine tool. In particular, such a calibration process may be repeated for each of the axial positions along the beam path where tool measurements are to be acquired. Two sets of calibration data may thus be stored that relate to the two different tool measurement positions and such calibration data may be used for the different measurements, as appropriate.

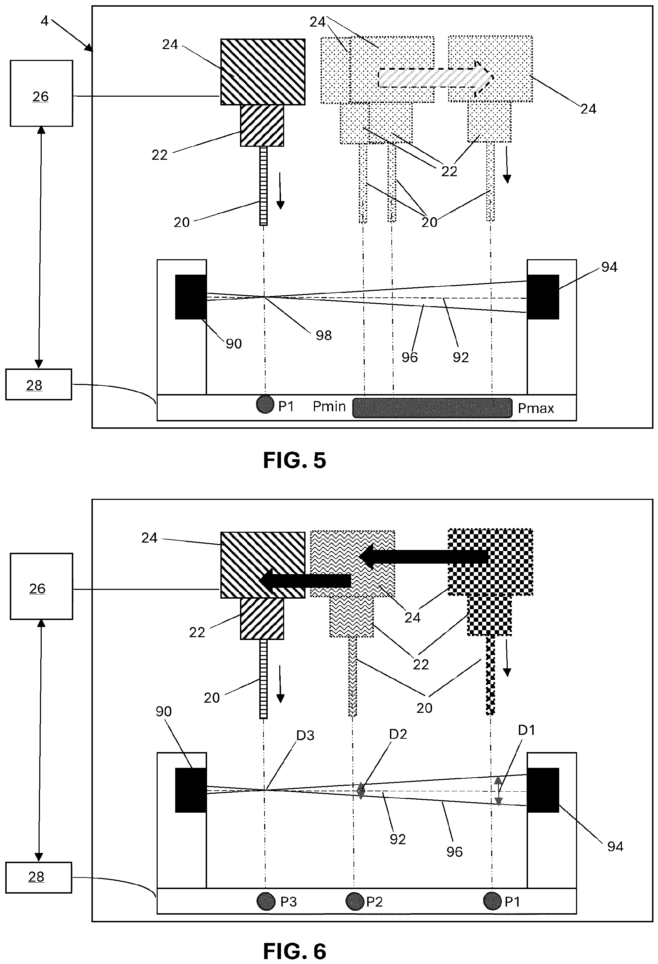

Referring to figure 5, a further example of a method of the present invention is illustrated. In this example, the tool setting apparatus is configured in a similar manner to that shown in figure 4 but an adjustable second axial position along the beam path 92 is used.

The method comprises a first step of taking a first measurement of the tool 20 at a first axial position along the beam path (i.e., approximately above the point P1). The tool setting apparatus may have previously been calibrated at this first axial position, allowing such tool measurements to be conducted in a similar manner to prior art measurements. This first step of the tool measurement method can be used to provide measurement results that are analysed to extract information on the configuration of the tool 20. For example, the first measurements may measure tool dimensions, or any eccentricity associated with tool rotation.

The method may include a step of calculating the beam diameter that is required for a particular second measurement, based on the results of the first step. For example, the eccentricity measured in the first step may be used to calculate a beam diameter that ensures the tool edge remains partially within the light beam whilst a tool inspection path is traversed. A tool inspection path may also be calculated during this step. This calculation of the required beam diameter and/or the tool inspection path may be performed by the tool setting apparatus (e.g., by the interface 28), by the machine tool controller 26 or by a separate computer/processor (not shown).

The second step may then comprise inserting the tool 20 into the beam at an axial position along the beam path that provides the required beam diameter. For example, it may be known that the beam diameter changes from a first value (above a position on the base marked Pmin) to a second value (above a position on the based marked Pmax) in a known or previously measured manner. A memory (e.g., within the interface 28 or numerical controller 26) may store such information on the beam diameter as a function of the position along the beam path, for example in the form of a look-up table or a mathematical (e.g., polynomial) function. A point may thus be calculated (e.g., by the interface 28 of controller 26) within the Pmin to Pmax range that provides the beam diameter required for the second measurement of the tool profile. The second measurement may then be performed with the tool breaking the beam at the selected point. In this manner, the second step is adapted based on the measurements made in the first step.

In a variant of the above-described method, it would also be possible to omit the first step mentioned above and move straight to the second step of inserting the tool 20 into the light beam at an axial position along the beam path that provides a required beam diameter. For example, a variation in beam diameter along the beam path may be known (e.g., it may have been previously stored in a look-up table or as a mathematical function) and the user may select a desired beam diameter for the required tool measurement. For example, the desired beam diameter may be manually selected by the user based on the tool type or the nominal tool geometry. Alternatively, the desired beam diameter may be selected based on a measurement of the tool (e.g., a measurement of the tool run out or of tool defects) that was performed using a separate offline tool inspection device.

Referring to figure 6, a further example of a method of the present invention is illustrated. In this example, the tool setting apparatus is configured in a similar manner to that shown in figures 4 and 5.

The first step comprises inserting the tool 20 into the beam at a first axial position P1 where the light beam has a relatively large diameter D 1. A scanning measurement is then performed by moving the tool along a first tool inspection path that traces the light beam along the tool edge. The first tool inspection path may be generated using a nominal or expected tool profile. The use of a large light beam means the measurement scan can be successfully performed (i.e., without the edge of the tool leaving the light beam) even if there are relatively large deviations of the tool from nominal. This coarse scan of the tool can thus provide a coarse measure of the tool profile, including any eccentricity that may be present (e.g., due to how the tool is mounted in the spindle of the machine tool).

The coarse scan of the tool that is performed in the first step provides low resolution information on the shape and configuration of the tool, which allows a refined (second) tool inspection path to be calculated. Although more accurate than the first tool inspection path, there will still be a level of uncertainty associated with the second tool inspection path. A second beam diameter D2, and hence a second axial position P2 along the beam path where the light beam would have such a diameter, is also calculated that is as small as possible whilst still ensuring the edge of the tool will remain in the light beam during a scanning measurement using the second tool inspection path.

The second step thus comprises inserting the tool 20 into the beam at the calculated second axial position P2 where the light beam has a relatively large diameter D2. A scanning measurement is then performed by moving the tool along the second tool inspection path so as to trace the light beam along the tool edge. The beam intensity data collected whilst the second tool inspection path is traversed will thus provide a more accurate measurement of the tool profile than the measurement of the first step. This second scan may thus be termed a "fine" or higher resolution scan.

The fine scan of the tool performed in the second step can thus provide some detailed information on the tool profile. This may include identifying any chips or damage (i.e., cutting tool defects) to portions of the cutting edge or edges of the tool. In many cases, it is useful to have as much information as possible about such tool defects to ascertain if the tool is still suitable for its intended cutting tasks. It is therefore also possible to calculate a third tool inspection path from the fine scan data of the second step. This third tool inspection path may relate only to selected areas of interest on the tool (e.g., any tool defects etc). The finer resolution of the second scan also means that traversal of the third tool inspection path can be performed using an even smaller beam size. There may thus be a calculation of the minimum beam size required for a third measurement scan, e.g., taking into account the measurement uncertainties of the second scan. As in this example, it may be found that the smallest beam size of the apparatus (i.e., at point P3) can be used.

An optional third step of the method thus comprises inserting the tool 20 into the beam at the calculated third axial position P3 where the light beam has a relatively small diameter D3. In this example, the third axial position P3 is the focal point of the light beam where the beam diameter is the smallest. However, it could be performed at any suitable location along the beam path that provides the required beam diameter. A scanning measurement is then performed by moving the tool along the third tool inspection path so as to trace the light beam along the tool edge or along the selected parts of the tool edge. The beam intensity data collected whilst the third tool inspection path is traversed will thus provide an even more accurate measurement of the tool profile than the measurement of the second step. This third measurement scan may thus be termed a super-fine or a very high-resolution scan. The measurement from the second and third scans may then be used to assess if the cutting tool is still likely to cut material in the desired manner, or if it should be replaced.

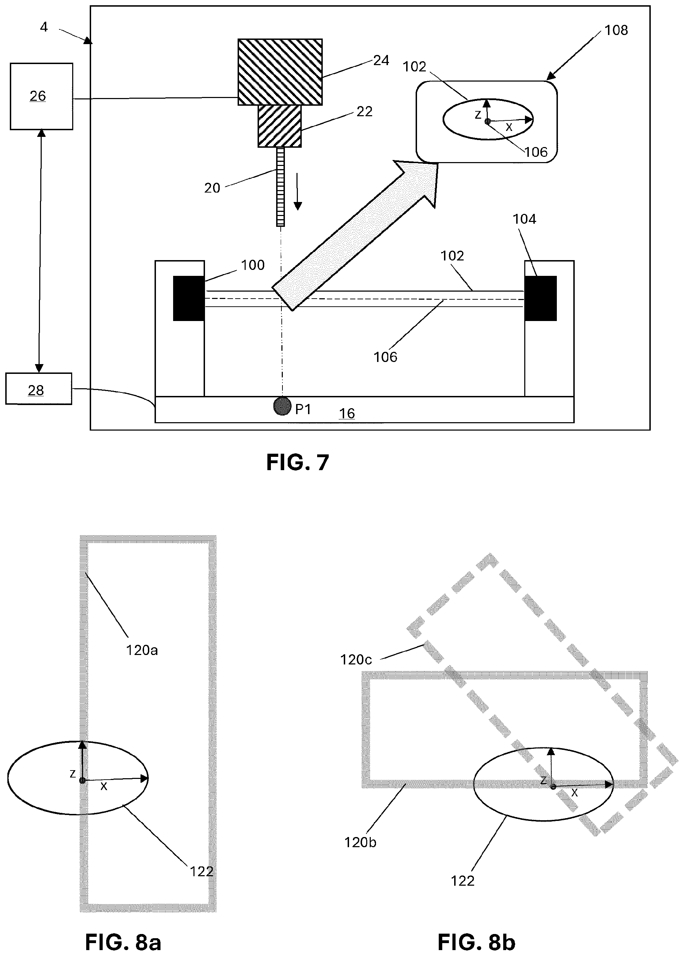

Referring next to figures 7, 8a and 8b, an alternative embodiment will be described that makes use of an asymmetrical light beam.

Figure 7 shows a further alternative configuration of a tool setting apparatus. In particular, the apparatus includes a transmitter 100 that generates an oval-shaped light beam 102 that is directed to a receiver 104 along a beam path 106. The inset 108 to figure 7 shows the cross-section of the light beam at the axial position P1. In this example, the cross-section of the light beam 102 is oval (i.e., an example of an asymmetrical cross-section) and does not vary in size along the beam path 106. In particular, the light beam 102 has a minor axis aligned in the z-direction and major axis in the x-direction. It would, of course, be possible for the minor/major axes to be orientated at any angle relative the non-contact tool setting apparatus.

The length of the tool 20 could be measured using a trigger measurement by orientating the tool vertically downwards as shown in figure 7 (i.e., aligning the longitudinal axis of the tool 20 with the z-axis of the machine tool). In such an example, the effective beam width for the trigger measurement is twice the width of the minor axis. If the tool was rotated by 90°, the end of the tool could instead be brought into the beam from the side and the effective beam width would then be equal to twice the width of the major axis. Inserting the tool at an angle between the vertical and horizontal would produce an effective beam width between twice the minor axis length and twice the major axis length. In other words, the effective beam width used for a measurement can be adjusted by changing the orientation at which the tool 20 is moved into or out of the light beam 102. In an analogous manner to that described above, a memory (e.g., within the interface 28 or numerical controller 26) may store information on the effective beam width as a function of radial angle, for example in the form of a look-up table or a mathematical (e.g., polynomial) function. The various measurement techniques described above in which the axial position of the tool is altered to change the effective beam width may then be implemented by instead altering the radial direction of the tool relative to the light beam.

Figures 8a and 8b schematically illustrate how an asymmetrical (oval) light beam of the type produced by the apparatus described with reference to figure 7 could also be used to perform a scanning measurement along the edge of a tool.

Figure 8a show a portion of a tool 120a that has been inserted into a light beam 122 of a non-contact tool setting apparatus of the type described with reference to figure 7 above. An edge of the tool (which is parallel to the longitudinal axis of the tool) is measured by moving the tool in the direction of the minor axis of the light beam 122 (i.e., vertically upwards, or vertically downwards in the figure). The measurement range of the scanning measurement is then equal to twice the length of the major axis. In other words, deviation of the tool edge by the distance x from the nominal position shown in figure 8a will either cause the light beam to be fully blocked or unobstructed, depending on the direction of the deviation. This orientation of the tool thus provides a large measurement range (2x), allowing a coarse resolution scan of the tool.

Figure 8b shows a tool 120b that is inserted into the light beam 122 from the horizontal direction (i.e., perpendicular to the direction of figure 8a). In this example, the edge of the tool 120b is measured using a scanning process in which tool is moved in a direction parallel to its longitudinal axis and also parallel to the major axis of the light beam 122 (which in this case means the tool moves in a horizontal direction in figure 8b). In this example, the range of the scanning measurement is equal to twice the length of the minor axis. In other words, deviation of the tool edge by the distance z from the nominal position shown in figure 8b will either cause the light beam to be fully blocked or unobstructed, depending on the direction of the deviation. This orientation of the tool thus provides a small measurement range (i.e., a shorter measurement range than shown in figure 8a), thereby providing a finer resolution scan of the tool.

It would also be possible to orientate the tool at any intermediate angle, such as the angle of the tool 120c shown in figure 8b. Again, the tool 120c would then be moved along its longitudinal axis relative to the light beam 122. In this case, an intermediate resolution scan (i.e., using a beam width between those providing the large and small measurement ranges) would be provided.

It should also be noted that the asymmetrical beam concept described with reference to figures 7, 8a and 8b could be combined with the varying size beam concept described with reference to figures 2 to 6. In other words, the light beam of the non-contact tool setting apparatus could vary in both cross-sectional area (size) along the beam path and be asymmetrical. In such an example, both the orientation of the tool relative to the light beam and the axial position along the light path could be adjusted to alter the effective beam width used for measurement. This would provide greater flexibility in setting a desired beam width and may be especially advantageous for machine tool with access restrictions or with limited axes of motion. The cross-sectional shape of the light beam could also vary along the beam path. For example, a light beam may be provided that provides a pencil-shaped focus at a focal point on the beam path with a gradual variation in the size and shape of the cross-section away from focal point.

It should be noted that the above are provided as examples only. The profile of the light beam along the axis of the beam path may vary differently to that illustrated. For example, a more gradual (waisted) axial change in beam profile may be provided. The beam also need not be circular, Gaussian or oval in cross-sectional profile but could instead be arranged to have any desired shape. The beam dimension may also vary differently in different dimensions (e.g., the beam width in one radial direction alone may vary along the beam path). The provision of a unitary tool setting apparatus is also not essential because the transmitter and receiver could be mounted to parts of the machine tool, rather than to a common base. The type of machine tool, and the way the relative motion is imparted between the tool and light beam, may also be different to the examples given above. For example, a turning tool on a milling machine may be brought into contact with a rotating workpiece. Similar, for a given type of machine tool, the relative motion (translation, rotation) that can be provided between the object and the non-contact tool setting apparatus may be limited. Finally, the term tool-setting apparatus is used herein because it is commonly used to describe such apparatus, but it should be noted that the apparatus and method could be employed at any stage of a machining process (i.e. not just when setting up a tool prior to a cutting operation).

## Claims

1. A method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam having a cross-sectional area that varies along the beam path and/or an asymmetrical cross-section, the method comprising a step of taking a first measurement of the object in which the object occludes the light beam at a first axial position along the beam path from a first radial direction perpendicular to the beam path,
**characterised in that** the method comprises a step of calculating the first axial position and/or the first radial direction using a previously determined variation in the cross-sectional area and/or asymmetry of the light beam.

2. A method according to any preceding claim, wherein the first measurement comprises measuring at least one dimension of the object by moving the object into, or out of, the light beam and issuing a trigger signal to a controller of the machine tool when the intensity of light received by the receiver crosses a threshold.

3. A method according to any preceding claim, wherein the first measurement comprises the steps of moving the object relative to the light beam along an inspection path that traces the light beam along a periphery of the object, and analysing the intensity of light received by the receiver whilst the inspection path is traversed to determine a profile of the object.

4. A method according to any preceding claim, comprising a step of taking a second measurement of the object in which the object occludes the light beam at a second axial position along the beam path from a second radial direction perpendicular to the beam path, the first axial position and the first radial direction providing a first effective beam width for the first measurement, the second axial position and the second radial direction providing a second effective beam width for the second measurement, wherein the first effective beam width is different than the second effective beam width.

5. A method according to claim 4, wherein the light beam has a cross-sectional area that varies along the beam path, and the first axial position is spaced apart from the second axial position along the beam path.

6. A method according to any one of claims 4 to 5, wherein the light beam has an asymmetrical cross-section, and the first radial direction is different to the second radial direction.

7. A method according to any one of claims 4 to 6, wherein the first effective beam width differs from the second effective beam width by at least 10%.

8. A method according to any one of claims 4 to 7, wherein the first effective beam width at the first position is larger than the second effective beam width at the second position, the second measurement thereby having a finer resolution than the first measurement.

9. A method according to any one of claims 4 to 8, wherein the first axial position and the first radial direction are predefined and the first measurement comprises using calibration data collected at the first axial position using the first radial direction.

10. A method according to any one of claims 4 to 8, comprising a step of using the first measurement to set the second axial position and/or the second radial direction of the second measurement.

11. A method according to any preceding claim, wherein the light beam is a convergent light beam having a cross-sectional area that reduces along the beam path from the transmitter to the receiver, or the light beam is a divergent light beam having a cross-sectional are that increases along the beam path from the transmitter to the receiver.

12. A method according to any one of claims 1 to 10, wherein the light beam is a focussed light beam that is focussed to a focal point on the beam path, the focal point being closer to one of the receiver or the transmitter than the other of the receiver or the transmitter.

13. A method according to any preceding claim, comprising an initial step of establishing the variation in the cross-sectional area and/or asymmetry of the light beam by measuring a cross-sectional width of the light beam at a plurality of positions along the beam path and/or in a plurality of radial directions.

14. A method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam having a cross-sectional area that varies along the beam path, wherein the method comprises the steps of;
(i) taking a first measurement of the object with the object located in the light beam at a first position along the beam path, and
(ii) taking a second measurement of the object with the object located in the light beam at a second position along the beam path, the first position being spaced apart from the second position.

15. A method of using a non-contact tool setting apparatus mounted to a machine tool to measure an object, the non-contact tool setting apparatus comprising a transmitter configured to generate a light beam for detection by the receiver, the light beam passing along a beam path into which the object can be placed, the light beam being asymmetrical, wherein the method comprises the steps of;
(i) taking a first measurement of the object from a first radial direction perpendicular to the beam path, and
(ii) taking a second measurement of the object from a second radial direction perpendicular to the beam path, the first radial direction being different than the second radial direction.
